(19) Europäisches Patentamt
European Patent Office
Office européen des brevets

(11) **EP 1 088 235 B2**

(12) **NOUVEAU FASCICULE DE BREVET EUROPEEN**
Après la procédure d'opposition

(45) Date de publication et mention de la décision concernant l'opposition:
**17.06.2009 Bulletin 2009/25**

(45) Mention de la délivrance du brevet:
**16.06.2004 Bulletin 2004/25**

(21) Numéro de dépôt: **00918956.4**

(22) Date de dépôt: **12.04.2000**

(51) Int Cl.:
**G01P 3/44** *(2006.01)* **G01D 5/14** *(2006.01)*
**G01D 5/16** *(2006.01)*

(86) Numéro de dépôt international:
**PCT/FR2000/000942**

(87) Numéro de publication internationale:
**WO 2000/062079 (19.10.2000 Gazette 2000/42)**

(54) **ROULEMENT POURVU D'UN DISPOSITIF DE DETECTION DES IMPULSIONS MAGNETIQUES ISSUES D'UN CODEUR, LEDIT DISPOSITIF COMPRENANT PLUSIEURS ELEMENTS SENSIBLES ALIGNES**

LAGER MIT EINER ERKENNUNGSVORRICHTUNG FÜR MAGNETISCHE IMPULSE VON EINEM IMPULSKODIERER, WOBEI DIE ERKENNUNGSVORRICHTUNG MEHRERE, AUF EINER LINIE LIEGENDE SENSORELEMENTE AUFWEIST

BEARING PROVIDED WITH A DEVICE FOR DETECTING MAGNETIC PULSES FROM AN ENCODER WHEREBY SAID DEVICE COMPRISES SEVERAL ALIGNED SENSITIVE ELEMENTS

(84) Etats contractants désignés:
**DE FR GB IT**

(30) Priorité: **14.04.1999 FR 9904658**

(43) Date de publication de la demande:
**04.04.2001 Bulletin 2001/14**

(73) Titulaire: **SNR ROULEMENTS**
**F-74010 Annecy Cedex (FR)**

(72) Inventeurs:
• **DESBIOLLES, Pascal**
**F-74570 Thorens-Glières (FR)**
• **SANTOS, A., John**
**Farmington, CT 06032 (US)**
• **LACROIX, Mark**
**New Hartford, CT 06057 (US)**

(74) Mandataire: **Geismar, Thierry**
**NOVAGRAAF IP**
**3, avenue de l'Opéra**
**75001 Paris (FR)**

(56) Documents cités:
EP-A- 0 274 841    EP-A- 0 395 783
EP-A- 0 443 940    EP-A- 0 464 405
EP-A- 0 890 752    FR-A- 2 563 668
US-A- 4 418 372

• DE BLANC E.: 'Roulement a billes avec capteur integre' REVUE FRANCAISE DE MECHANIQUE vol. 2, 1994, page 129-133
• 'FAG Rillenkugellager mit integriertem Sensor' FAG TECHNISCHE INFORMATIONEN Décembre 1998,

Remarques:
Le dossier contient des informations techniques présentées postérieurement au dépôt de la demande et ne figurant pas dans le présent fascicule.

**Description**

L'invention se rapporte au domaine technique des roulements pourvus d'un moyen tournant générateur d'impulsions, appelé « codeur », un dispositif de détection, appelé « capteur », permettant l'obtention d'une information, telle que par exemple, la vitesse de rotation, la position angulaire et le sens de rotation d'un palier comprenant un tel roulement à codeur incorporé.

De tels paliers peuvent, par exemple, être employés pour les roues de véhicules automobiles pourvus de système anti-blocage des roues.

L'invention se rapporte plus particulièrement, mais non exclusivement, aux roulements à codeur magnétique incorporé, le capteur fonctionnellement associé étant de type magnétorésistance ou sonde à effet Hall.

Par « sonde à effet Hall », on désigne ici des capteurs comprenant au moins un élément sensible, généralement un semi-conducteur sous forme de plaquette, tel que, lorsqu'il est parcouru par un courant I, en étant par ailleurs soumis à une induction B faisant avec le courant un angle $\theta$, il apparaît dans une direction perpendiculaire au courant I et à l'induction B une tension V valant V=K.I.B. $\sin\theta$, K étant appelé « constante de Hall », et étant caractéristique du matériau et de la géométrie de l'élément sensible, K variant avec la température.

Par « magnétorésistance », on désigne ici une varistance sensible à l'intensité d'un champ magnétique, en d'autres termes une résistance en matériau semiconducteur dont la valeur ohmique varie lorsque varie l'intensité d'un champ magnétique unidirectionnel appliqué perpendiculairement à la direction du courant qui parcourt la résistance.

Les sondes de Hall sont considérées comme des capteurs actifs, dans la mesure où l'information délivrée est liée à une force électromotrice.

Lorsque ces sondes de Hall sont utilisées pour la traduction de position ou de déplacement, l'aimant qui crée l'induction est le corps d'épreuve sur lequel agit la valeur primaire à mesurer, modifiant le mesurande secondaire, à savoir conventionnellement

la composante normale de l'induction, mesurande auquel est directement sensible la sonde.

On connaît déjà, dans l'art antérieur, de nombreuses conceptions de roulements à codeur magnétique incorporé et capteur de type sonde à effet Hall ou magnétorésistance.

On peut se référer, par exemple, aux documents suivants :

- demandes de brevet en France n° 2 667 947, 2 669 432, 2 669 728, 2 671 633, 2 678 691, 2 678 692, 2 690 989, 2 693 272, 2 694 082, 2 702 567, 2 710 985, 2 718 499 ;
- demandes de brevet européen n° 375 019, 420 040, 420 041, 438 624, 487 405, 488 853, 498 298, 518 157, 521 789, 522 933, 531 924, 557 931, 557 932, 647 851, 693 689, 701 132, 701 133, 714 029, 745 857, 759 311, 753 679, 767 385.

On peut se référer, également à titre d'exemple, aux documents suivants, issus de la demanderesse :

- demandes de brevet en France n° 2 639 689, 2 640 706, 2 645 924, 2 730 283, 2 732 458, 2 717 266, 2 701 298 ;
- demandes de brevet européen n° 371 836, 376 771, 484 195, 394 083, 607 719, 616 219, 619 438, 631 140, 652 438, 671 628, 725 281, 735 348.

Lorsque l'on souhaite connaître tant la vitesse de rotation de la bague intérieure ou de la bague extérieure du roulement que le sens de rotation de cette bague, il est connu de disposer de deux signaux déphasés de 90° électrique, afin de définir le sens de rotation.

A fin de clarté, il est rappelé ici que deux signaux sinusoïdaux de même fréquence sont dits en quadrature lorsque ces signaux sont déphasés de $\pi/2$ ou 90° ou encore un quart de cycle, c'est-à-dire que l'un des signaux est à sa valeur de crête lorsque l'autre passe par zéro.

Ainsi, par exemple, le document FR-A-2 599 794, issu de la demanderesse, décrit un palier ou roulement à capteur d'informations comportant un élément fixe supportant,

dans un mode de réalisation, deux capteurs de Hall ou magnérorésistances écartés angulairement par un intervalle de n+0,5n, dans lequel n est la longueur d'un aimant.

Le document EP-A-395 783 décrit un palier à capteur pour mesurer la vitesse de rotation et/ou l'angle de rotation, comprenant un ou plusieurs capteurs à effet Hall.

Dans les dispositifs du type mentionné ci-dessus, les signaux déphasés sont issus de deux éléments sensibles à effet Hall ou magnétorésistances, placés sur un substrat ou implantés directement sur silicium à une distance définie et fixe entre eux, cette distance étant fonction du codeur.

Compte tenu de la distance inter-élément fixée par le principe même du capteur, dans le cas où la distance polaire n'est pas adaptée, les signaux digitaux issus des éléments sensibles ne sont pas en quadrature.

De sorte que les dispositifs connus de l'art antérieur présentent les inconvénients suivants :

- la plage de longueur polaire, donc de codeur utilisable avec un capteur dual (c'est-à-dire à deux éléments sensibles), dont la longueur polaire est fixe, est limitée par la tolérance sur la quadrature des signaux digitaux de sortie ;
- pour une longueur polaire correspondant à la distance inter-éléments, la tolérance sur les signaux de sortie est fonction de la technologie du capteur et de la précision de placement des éléments sensibles ;
- dans le cas d'un capteur dual délivrant des signaux analogiques associés à un principe d'interpolation tel que décrit dans le document WO-97/01660 ou dans le document FR-97/12033, la précision requise concernant la quadrature des signaux analogiques limite l'utilisation d'un tel capteur à des codeurs magnétiques dont la distance polaire correspond de manière précise à la distance inter-éléments.

L'invention se rapporte à un dispositif de détection du sens de rotation d'une bague extérieure ou d'une bague intérieure d'un roulement, ce dispositif permettant également la détection de la position angulaire et de la vitesse de rotation de ladite bague, ledit dispositif permettant une adaptation à différentes longueurs polaires et une annulation de l'offset magnétique.

Selon un premier aspect de l'invention, le dispositif de détection comprend un nombre pair 2N d'éléments sensibles, par exemple divisé en deux sous-ensembles de N éléments, chaque élément sensible du premier sous ensemble étant connecté à un premier additionneur, chaque élément sensible du second sous-ensemble étant connecté à un deuxième additionneur, les deux sommes $S_1$, $S_2$ issues des premier et deuxième additionneurs étant connectées à l'entrée d'un troisième additionneur, la sortie $S_1$ du premier additionneur et, via un inverseur, la sortie $S_2$ du deuxième additionneur étant connectée à l'entrée d'un quatrième additionneur, les signaux SIN = $S_1$+$S_2$ et COS = $S_1$-$S_2$ issus des troisième et quatrième additionneurs étant traités par un circuit de sorte à déduire le sens de rotation et/ou la vitesse de rotation et/ou la position du moyen générateur d'impulsions par rapport au dispositif de détection.

Dans une première variante, la longueur polaire Lp du codeur est sensiblement égale au produit du nombre 2N d'éléments sensibles par la distance d inter élément sensible, les signaux SIN et COS étant alors en quadrature sensiblement parfaite et ayant sensiblement même amplitude.

Dans une deuxième variante, la longueur polaire Lp du codeur est inférieure au produit du nombre 2N d'éléments sensibles par la distance d inter éléments sensibles.

Dans une troisième variante, la longueur polaire Lp du codeur est supérieure au produit du nombre 2N d'éléments sensibles par la distance d inter éléments sensibles.

Par programmation un nombre pair 2M d'éléments sensibles, inférieur au nombre total 2N de ces éléments est employé pour former deux sous-ensembles de M éléments, chaque élément sensible du premier sous-ensemble étant connecté à un premier additionneur, chaque élément sensible du second sous-ensemble étant connecté à un deuxième additionneur, les deux sommes issues des premier et deuxième additionneurs étant connectées à l'entrée d'un troisième additionneur et via un inverseur, la sortie du deuxième additionneur étant connectée à l'entrée d'un quatrième additionneur, les signaux issus des troisième et quatrième additionneurs étant traités par un circuit de sorte à déduire le sens de rotation et/ou la vitesse de rotation du moyen générateur d'impulsion par rapport au dispositif de détection, lesdits signaux étant en quadrature sensiblement parfaite.

La programmation peut être réalisée par EEPROM ou par Zener Zapping.

Dans une sous variante envisageable, un circuit amplificateur est apte à rétablir une amplitude identique pour les signaux issus des troisième et quatrième additionneurs.

Selon un deuxième aspect de l'invention, le dispositif de détection comprend un nombre d'éléments sensibles multiple de quatre, par exemple divisé en quatre sous-ensembles de P éléments,

- chaque élément sensible du premier sous-ensemble à P éléments étant connecté à un premier additionneur fournissant un signal $S_1$ ;
- chaque élément sensible du deuxième sous-ensemble à P éléments étant connecté à un deuxième additionneur fournissant un signal $S_2$ ;
- chaque élément sensible du troisième sous-ensemble à P éléments étant connecté à un troisième additionneur fournissant un signal $S'_1$ ;
- chaque élément sensible du quatrième sous-ensemble à P élément étant connecté à un quatrième additionneur fournissant un signal $S'_2$ ;

un circuit d'additionneurs et d'inverseurs fournissant deux signaux SIN et COS valant respectivement :

$$SIN = (S_1 - S_2) - (S'_1 - S'_2) \; ;$$

$$COS = (S_1 + S_2) - (S'_1 + S'_2) \; ;$$

ces signaux SIN et COS étant exempts d'offset magnétique.

En variante, le dispositif de détection comprend un interpolateur augmentant la résolution de ces signaux de sortie.

Avantageusement, les éléments sensibles peuvent être intégrés sur un support de circuit type ASIC. Le dispositif de détection pouvant être également inclus dans un circuit intégré personnalisé type ASIC.

Selon une variante, les éléments sensibles alignés sont, par exemple, choisis parmi le groupe comprenant les sondes à effet Hall, les magnétorésistances, les magnétorésistances géantes et sont placés à équidistance les uns des autres.

Suivant une réalisation, le moyen générateur d'impulsions est une pièce annulaire en matériau synthétique chargé de particule de ferrite formée d'une pluralité de domaines contigus à direction d'aimantation inversée d'un domaine donné par rapport aux deux domaines qui lui sont contigus.

Suivant une réalisation, le moyen générateur d'impulsions est intégré dans un ensemble préassemblé formant joint d'étanchéité, le dispositif de détection pouvant être solidarisé de manière éventuellement amovible à la bague fixe.

D'autres objets et avantages de l'invention apparaîtront au cours de la description suivante de modes de réalisation, description qui va être effectuée en référence aux dessins annexés dans lesquels :

- la figure 1 est une représentation schématique partielle d'une paire de pôles d'un codeur et de l'induction magnétique sensiblement sinusoïdale à l'entrefer de travail qu'il délivre ;
- la figure 2 représente un mode de réalisation du dispositif de détection suivant l'invention ;
- la figure 3 représente un deuxième mode de réalisation d'un dispositif de détection suivant l'invention.

Un roulement à codeur magnétique incorporé comprend un moyen tournant multipolaire générateur d'impulsions magnétiques appelé « codeur », et un dispositif de détection de ce champ magnétique, appelé « capteur ».

Le codeur comprend un nombre pair de pôles et est disposé, soit sur la circonférence d'une bague tournante, soit intégré dans un ensemble pré assemblé formant un joint d'étanchéité.

Par exemple, le codeur aimanté multipolaire peut être une pièce annulaire, en matériau synthétique chargé de particules de ferrite de Baryum ou de ferrite de Strontium, ou d'un autre matériau ferromagnétique dur, formée d'une pluralité de domaines contigus à direction d'aimantation inversée d'un domaine donné par rapport aux deux domaines qui lui sont contigus.

La longueur polaire Lp du capteur est définie comme la longueur d'un pôle magnétique mesuré au rayon de lecteur considéré.

Dans une telle configuration, on peut considérer que l'induction magnétique délivrée par le codeur est sinusoïdale à l'entrefer considéré.

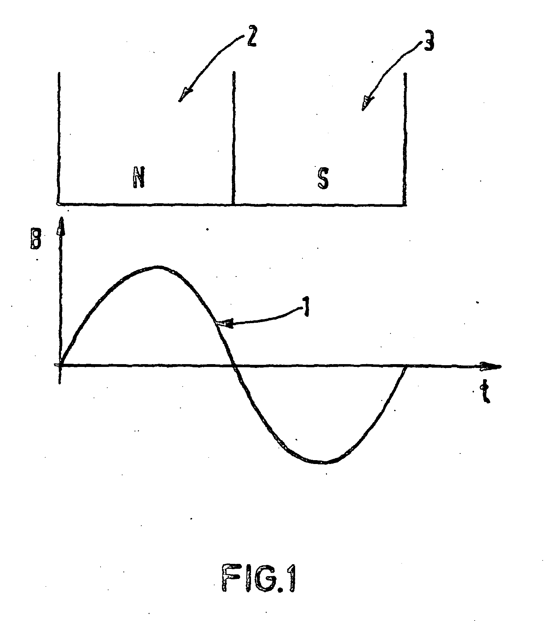

La figure 1 illustre schématiquement une période 1 d'une composante, par exemple normale, de ladite induction B, pour une paire de pôles 2, 3 du codeur.

Le dispositif de détection 4 comprend un nombre pair 2N d'éléments sensibles 5 de type magnétorésistance ou sonde à effet Hall, placés à égale distance d entre eux, ces éléments 5 étant sensiblement disposés le long d'une droite D, par exemple les éléments sensibles 5 peuvent être disposés sur un arc de cercle qui peut être approximé à une droite.

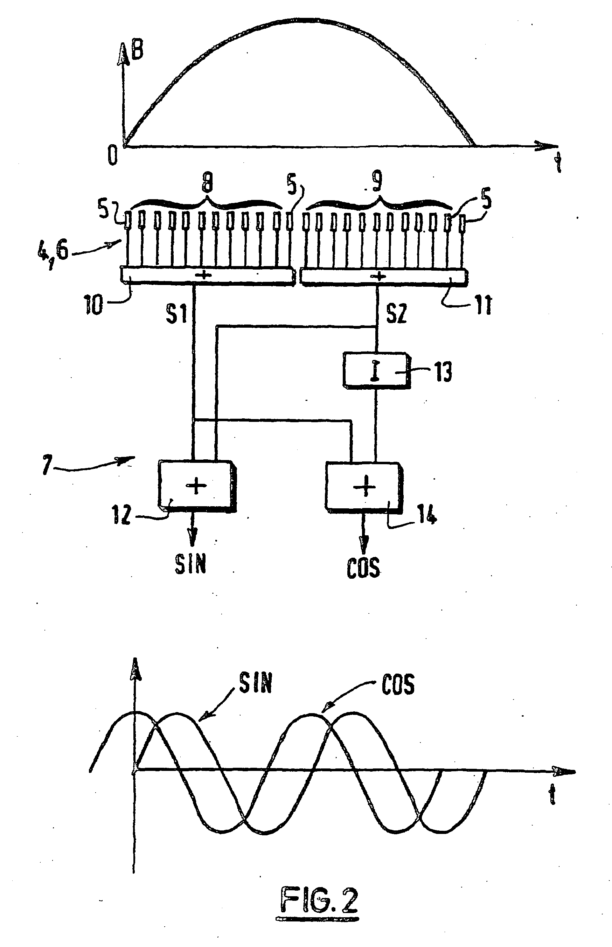

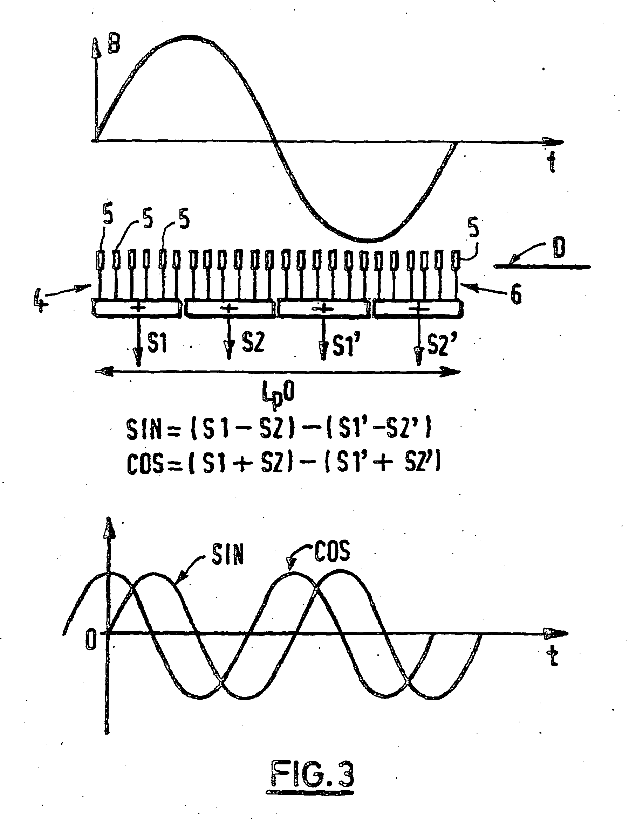

Dans le mode de réalisation représenté en figures 2 et 3, vingt-quatre éléments 5 sont prévus.

Cet agencement définit une barrette 6 d'éléments sensibles 5 de longueur égale à (2N-1)d.

Le dispositif de détection comprend également un circuit électronique 7 permettant de traiter les signaux analogiques issus des éléments sensibles 5 afin d'obtenir des informations telles que, par exemple, la vitesse et/ou le sens et/ou l'angle de rotation du codeur magnétique multipolaire, et, par là même, la vitesse et/ou le sens et/ou l'angle de rotation de la bague d'un roulement supportant ce codeur.

Le dispositif de détection peut être utilisé de façon intégrée sur un substrat en silicium ou équivalent par exemple AsGa, de sorte à former un circuit intégré personnalisé pour application spécifique, circuits parfois désignés sous le terme ASIC (Application Specific Integrated Circuit), pour faire référence aux circuits intégrés conçus partiellement ou complètement en fonction des besoins.

Dans le mode de réalisation de la figure 2, l'ensemble d'éléments sensibles 5 est divisé en deux sous-ensembles 8, 9 de N éléments (N=12, dans la réalisation de la figure 2).

Chaque élément sensible 5 du premier sous-ensemble 8 est connecté à un premier additionneur ou circuit d'addition 10, tel qu'un amplificateur, assurant la sommation des signaux $Se_1$, $Se_2$, ..., $Se_N$, issus des N premiers éléments sensibles 5.

De même, chaque élément sensible 5 du second sous-ensemble 9 est connecté à un deuxième additionneur ou circuit d'addition 11, tels qu'un amplificateur, assurant la sommation des signaux $Se_{(N+1)}$, $Se_{(N+2)}$, $Se_{(N+3)}$, ..., $Se_{2N}$, issus des N autres éléments sensibles.

On obtient ainsi deux signaux somme :

$$S_1 = Se_1 + ... + Se_N$$

$$S_2 = Se_{(N+1)} + ... + Se_{2N}.$$

Les deux sommes $S_1$ et $S_2$ des premier et deuxième moyens additionneurs sont connectés à l'entrée d'un troisième moyen additionneur ou circuit d'addition 12.

La sortie $S_1$ du premier moyen additionneur et, via un inverseur, la sortie $S_2$ du deuxième moyen additionneur sont connectées à t'entrée d'un quatrième moyen additionneur ou circuit d'addition 14.

Soit :

$$Se_1 = \sin(wt - \alpha/2)$$

$$Se_2 = ...$$

$$...$$

$$Se_{(2N-1)} = ...$$

$$Se_{2N} = \sin(wt - (1/2 + 2N-1)\alpha)$$

Où $\alpha$ correspond au déphasage entre deux éléments sensibles ($\alpha = \pi/2N.Lp0/Lp$) et la longueur $Lp0 = 2Nd$ est directement liée à longueur de la barrette d'éléments sensibles.

Aux sorties des troisième 12 et quatrième moyens additionneurs 14 apparaissent alors deux signaux sinusoïdaux :

$S_1 + S_2$ (appelé par la suite « SIN »)
et
$S_1 - S_2$ (appelé par la suite « COS ») respectivement
avec

$$SIN = \sin(\pi Lp0/2Lp).\sin(wt - \pi Lp0/2Lp)/\sin(\pi/2/Lp.Lp0/2N)$$

$$COS = 2\sin^2(\pi Lp0/4Lp).\cos(wt - \pi Lp0/2Lp)/\sin(\pi/2/Lp.Lp0/2N)$$

d étant la distance inter élément sensible.

D'après les deux formules ci-dessus, il apparaît que, dès lors que la longueur polaire Lp vaut 2Nd, le dispositif de détection délivre deux signaux de même amplitude SIN et COS en quadrature parfaite. Il apparaît donc que Lp0=2Nd est la longueur de référence pour laquelle les amplitudes du SIN et du COS sont identiques.

Le dispositif permet donc de s'affranchir des tolérances de placement des éléments sensibles, comme par exemple lorsque ces éléments sensibles sont placés sur un substrat.

Par ailleurs, lorsque la longueur polaire Lp du codeur n'est pas appropriée au capteur, seule l'amplitude des signaux est modifiée, la phase des signaux étant maintenue constante.

De sorte que si le dispositif est mis en oeuvre sans système d'interpolation électronique, c'est-à-dire si les signaux ont une résolution identique à celle du codeur magnétique, la quadrature des signaux SIN et COS est conservée, pour une large gamme de longueurs polaires Lp.

Dans l'optique de l'utilisation d'un interpolateur augmentant la résolution des signaux de sortie du dispositif de détection, décrit par exemple dans la demande de brevet FR-2 754 063, les signaux analogiques doivent remplir les conditions suivantes pour assurer les signaux digitaux interpolés de bonne qualité :

- être en quadrature parfaite ;
- être de même amplitude ;
- être exempt d'offset magnétique et électronique.

Un deuxième mode de réalisation de l'invention propose un dispositif de détection qui délivre des signaux analogiques remplissant ces trois conditions dans une large gamme de longueur polaire Lp.

Le dispositif de détection décrit précédemment délivre des signaux en quadrature parfaite.

Le rapport des amplitudes entre les signaux analogiques SIN et COS est donné par la formule :

$$R = amp\ (COS)/amp\ (SIN) = tg\ (\pi Lp0/4Lp)$$

Il apparaît que lorsque la longueur Lp0 est supérieure à la longueur polaire Lp, l'amplitude du signal SIN est inférieure à celle du signal COS.

Lorsque Lp0 est égale à Lp, les amplitudes des signaux SIN et COS sont égales.

Lorsque Lp0 est inférieure à Lp, l'amplitude du signal SIN est supérieure à celle du signal COS.

Dans une première variante de réalisation, et lorsque Lp0 est supérieure à Lp, un moyen d'augmenter le nombre de longueurs polaires utilisables est de réduire la longueur de la barrette à 2M éléments utilisés sur les 2N (M étant inférieur à N) par programmation, par exemple de type EEPROM ou Zener zapping.

Par EEPROM, on désigne ici une mémoire reprogrammable effaçables électriquement, dont chacune des cellules est par exemple formée d'un transistor MNOS ou DIFMOS ou équivalent, avec des transistors de lecture et d'écriture, les transistors MNOS (Metal Nitride Oxide Semiconductor), dérivés des transistors MOS, formant une mémoire à semiconducteur.

Par Zener zapping, on désigne conventionnellement l'ajustement Zener, c'est-à-dire une correction de l'erreur éventuelle de tension fournie par un dénumériseur pour un mot binaire d'entrée déterminé, par mise en court-circuit sélective de diodes Zener polarisées dans le sens inverse et alimentées par des sources de courant constant d'intensité croissante, l'intensité totale du circuit ainsi obtenu créant la tension de correction nécessaire aux bornes d'une résistance.

Une barrette de trente éléments sensibles espacés de 0,1 mm peut ainsi être utilisable pour des longueurs polaires comprises entre 3 et 1 mm avec un pas de 0,2 mm (les valeurs inférieures à 1 mm sont en théorie utilisables, mais délivrent peu de champs magnétiques).

Par conséquent, la programmation du capteur les rend utilisables en face de 11 longueurs polaires différentes dans ce cas.

Dans une seconde variante de réalisation, on peut amplifier de façon électronique l'un des deux signaux par rapport à l'autre pour retrouver une amplitude identique pour les signaux SIN et COS.

L'offset magnétique et électrique correspond à une composante continue (l'offset magnétique est quant à lui supposé uniforme sur l'ensemble des éléments sensibles) qui s'additionnent aux signaux détectés.

Le COS étant obtenu par soustraction des signaux $S_1$ et $S_2$, la composante continue liée à l'offset magnétique de chacun des deux termes est ainsi éliminée.

Ceci n'est pas vrai pour le SIN, qui lui, est obtenu par la sommation de l'ensemble des signaux issus des éléments sensibles.

Une solution permettant de s'affranchir de l'offset magnétique sur le SIN, illustrée sur la figure 3, consiste à décomposer la barrette en quatre quadrants à P éléments sensibles, la barrette étant composée de 4P éléments sensibles, et d'utiliser un circuit électronique, par exemple à base d'amplificateurs additionneurs et d'inverseurs, pour faire les combinaisons suivantes :

$$SIN = S_1 - S_2 - (S'_1 - S'_2)$$

$$COS = S_1 + S_2 - (S'_1 + S'_2).$$

Dans l'exemple illustré sur la figure 3, la barrette composée de 4P éléments sensibles recouvre une période magnétique complète, c'est-à-dire que :

$$Lp0 = 2Lp \text{ avec } Lp0=2Pd$$

Compte tenu du fait que le signal SIN est désormais obtenu par différence entre deux différences, la composante continue liée à l'offset magnétique est ainsi éliminée.

Les signaux analogiques utilisés dans l'interpolateur sont donc exempts d'offset magnétiques. La composante électronique peut être réduite par ailleurs par d'autres moyens non décrits dans la présente demande.

Lorsque la barrette est constituée de 4P éléments sensibles recouvrant une période magnétique complète, la décomposition de la barrette en quatre quadrants, telle que représentée en figure 3, conduit aux signaux SIN et COS dont les expressions sont :

$$SIN = -4 \frac{sin(\pi/8.Lp0/Lp).sin(\pi4.Lp0/Lp)}{sin(\pi/2/Lp.Lp0/4N)} \; sin(wt-\pi Lp0/Lp)$$

$$COS = 2 \frac{sin^2(\pi/4.Lp0/Lp)}{sin(\pi/2/Lp.Lp04/4N)} . \cos(wt-\pi Lp0/Lp)$$

L'annulation de l'offset magnétique, par le biais de cette décomposition en quatre quadrants, est compatible avec l'amplification du signal SIN ou COS pour augmenter les longueurs polaires admissibles, lorsque la longueur polaire Lp est inférieure à la longueur Lp0.

La valeur du gain est alors donnée par la formule suivante :

$$R = amp\,(COS)/amp\,(SIN)=sin(\pi Lp0/4Lp)/2sin(\pi Lp0-8Lp).$$

Le dispositif selon l'invention permet de mesurer le champ magnétique délivré par un codeur magnétique multipolaire et de délivrer deux signaux analogiques dont le déphasage est toujours de 90° électrique, ceci indépendamment de la longueur polaire du capteur.

Le traitement de ces deux signaux analogiques par un circuit ad hoc, non représenté, permet de déduire le sens de rotation du codeur magnétique multipolaire, y compris pour de faibles vitesses de rotation.

**Revendications**

1. Roulement pourvu d'un moyen annulaire générateur d'impulsions magnétiques et d'un dispositif de détection (4) de ces impulsions, le dispositif de détection comprenant une pluralité d'élements sensibles (5) délivrant des signaux analogiques, et un circuit électronique (7) permettant de traiter lesdits signaux analogiques afin d'obtenir des signaux en quadrature, **caractérisé en ce que** le dispositif de détection comprend un nombre pour 2N d'éléments sensibles alignés, dans lequel l'ensemble des 2N éléments sensibles est divisé en deux sous-ensembles (8, 9) de N éléments, chaque élément sensible (5) du premier sous ensemble (8) étant connecté à un premier additionneur (10), chaque élément sensible (5) du second sous-ensemble (9) étant connecté à un deuxième additionneur (11), les deux sommes ($S_1$, $S_2$) issues des premier et deuxième additionneurs (10, 11) étant connectées à l'entrée d'un troisième additionneur (12), la sortie (Si) du premier additionneur (10) et, via un inverseur (13), la sortie ($S_2$) du deuxième additionneur (11) étant connectés à l'entrée d'un quatrième addition- neur (14), les signaux SIN = $S_1$+$S_2$ et COS = $S_1$-$S_2$ issus des troisième (12) et quatrième additionneurs (14) étant traités par le circuit (7) de sorte à déduire le sens de rotation et/ou la vitesse de rotation et/ou la position du moyen générateur d'impulsions par rapport au dispositif de détection.

2. Roulement selon la revendication 1, **caractérisé en ce que** les éléments sensibles (5) alignés sont choisis parmi le groupe comprenant les sondes à effet Hall, les magnétorésistances, les magnétorésistances géantes.

**3.** Roulement selon la revendication 1 ou 2, **caractérisé en ce que** les éléments sensibles (5) sont placés à équidistance les uns des autres.

**4.** Roulement selon l'une quelconque des revendications 1 à 3, **caractérisé en ce que** le moyen générateur d'impulsions est une pièce annulaire en matériau synthétique chargé de particule de ferrite formée d'une pluralité de domaines contigus à direction d'aimantation inversée d'un domaine donné par rapport aux deux domaines qui lui sont contigus.

**5.** Roulement selon l'une des revendications précédentes **caractérisé en ce que** la longueur polaire (Lp) du moyen annulaire générateur d'impulsions magnétiques, définis par la longueur d'un pôle magnétique mesurée au rayon de lecteur considéré, est sensiblement égale au produit du nombre (2N) d'éléments sensibles (5) par la distance (d) inter élément sensible, les signaux SIN et COS étant alors en quadrature sensiblement parfaite et ayant sensiblement même amplitude.

**6.** Roulement selon l'une des revendications précédentes **caractérisé en ce que** la longueur polaire (Lp) du moyen annulaire générateur d'impulsions magnétiques est inférieure au produit du nombre (2N) d'éléments sensibles (5) par la distance (d) inter éléments sensibles.

**7.** Roulement selon l'une des revendications précédentes **caractérisé en ce que** la longueur polaire (Lp) du moyen annulaire générateur d'impulsions magnétiques est supérieure au produit du nombre (2N) d'éléments sensibles (5) par la distance (d) inter éléments sensibles.

**8.** Roulement selon la revendication 7, **caractérisé en ce que** le dispositif de détection comprend des moyens de programmation agencés pour qu'un nombre pair (2M) d'éléments sensibles, inférieur au nombre total (2N) de ces . éléments (5) puisse être employé pour former deux sous-ensembles de M éléments, chaque élément sensible (5) du premier sous-ensemble étant connecté à un premier additionneur (10) chaque élément sensible du second sous-ensemble étant connecté à un deuxième additionneur (11) les deux sommes issues des premier et deuxième additionneurs (10, 11) étant connectées à l'entrée d'un troisième additionneur (12) et via un inverseur (13), la sortie du deuxième additionneur (11) étant connectée à l'entrée d'un quatrième additionneur (14) les signaux issus des troisième (12) et quatrième additionneur (14) étant traités par un circuit de sorte à déduire le sens de rotation et/ou la vitesse de rotation du moyen générateur d'impulsion par rapport au dispositif de détection, lesdits signaux étant en quadrature sensiblement parfaite.

**9.** Roulement selon la revendication 8, **caractérisé en ce que** les moyens de programmation sont de type EEPROM.

**10.** Roulement selon la revendication 8, **caractérisé en ce que** les moyens de programmation sont de type Zener Zapping.

**11.** Roulement selon la revendication 6 ou 7, **caractérisé en ce qu'**un circuit amplificateur est apte à rétablir une amplitude identique pour les signaux issus des troisième et quatrième additionneurs.

**12.** Roulement pourvu d'un moyen annulaire générateur d'impulsions magnétiques et d'un dispositif de détection (4) de ces impulsions, le dispositif de détection comprenant une pluralité d'éléments sensibles (5) alignés délivrant des signaux analogiques, et un circuit électronique (7) permettant de traiter lesdits signaux analogiques afin d'obtenir des signaux en quadrature, dans lequel le dispositif de détection (4) comprend un nombre d'éléments sensibles (5) multiple de quatre divisé en quatre sous-ensembles de P éléments, dans lequel

- chaque élément sensible (5) du premier sous-ensemble à P éléments est connecté à un premier additionneur fournissant un signal $S_1$ ;
- chaque élément sensible (5) du deuxième sous-ensemble à P éléments est connecté à un deuxième additionneur fournissant un signal $S_2$ ;
- chaque élément sensible (5) du troisième sous-ensemble à P éléments est connecté à un troisième additionneur fournissant un signal $S_1'$ ;
- chaque élément sensible (5) du quatrième sous- ensemble à P élément est connecté à un quatrième additionneur fournissant un signal $S_2'$ ; et en ce que le dispositif de détection comprend en outre un circuit d'additionneurs et d'inverseurs adapté à fournir deux signaux SIN et COS valant respectivement :

$$SIN=(S_1 \cdot S_2)-(S'_1 \cdot S'_2) \, ;$$

$$COS =(S_1+S_2)-(S'_1+S'_2) \, ;$$

ces signaux SIN et COS étant exempts d'offset-megnétique.

**13.** Roulement selon la revendication 12, **caractérisé en ce que** les éléments sensibles (5) alignés sont choisis parmi le groupe comprenant les sondes à effet Hall, les magnétorésistances, les magnétorésistances géantes.

**14.** Roulement selon la revendication 12 ou 13, **caractérisé en ce que** les éléments sensibles (5) sont placés à équidistance les uns des autres.

**15.** Roulement selon l'une quelconque des revendications 12 à 14 **caractérisé en ce que** le moyen générateur d'impulsions est une pièce annulaire en matériau synthétique chargé de particule de ferrite formée d'une pluralité de domaines contigus à direction d'aimantation inversée d'un domaine donné par rapport aux deux domaines qui lui sont contigus.

**16.** Roulement selon l'une des revendications 12 à 15 **caractérisé en ce que** le dispositif de détection comprend un Interpolateur augmentant la résolution de ces signaux de sortie.

**17.** Roulement selon l'une quelconque des revendications précédentes **caractérisé en ce que** les éléments sensibles sont intégrés sur un support de circuit type ASIC.

**18.** Roulement selon la revendication 17, **caractérisé en ce que** le dispositif de détection est inclus dans un circuit intégré personnalisé type ASIC.

**19.** Roulement selon l'une quelconque des revendications 1 à 18, **caractérisé en ce que** le moyen générateur d'impulsions est intégré dans un ensemble préassemblé formant joint d'étanchéité.

**20.** Roulement selon la revendications 19, **caractérisé en ce qu'**il comprend une bague fixe à laquelle le dispositif de détection est solidarisé.

**Claims**

**1.** A bearing element provided with an annular means generating magnetic pulses and a device (4) for detecting these pulses, the detection device comprising a plurality of sensitive elements (5) delivering analogue signals, and an electronic circuit (7) for processing said analogue signals in order to obtain signals which are in quadrature, **characterised in that** the detection device (4) comprises an even number 2N of aligned sensitive elements, wherein the set of 2N sensitive elements is divided into two subsets (8, 9) of N elements, each sensitive element (5) in the first subset (8) being connected to a first adder (10), each sensitive element (5) in the second subset (9) being connected to a second adder (11), the two sums ($S_1$, $S_2$) issuing from the first and second adders (10, 11) being connected to the input of a third adder (12), the output (S1) of the first adder (10) and, via an inverter (13), the output (S2) of the second adder (11) being connected to the input of a fourth adder (14), the signals SIN = $S_1 + S_2$ and COS = $S_1 - S_2$ issuing from the third (12) and fourth adders (14) being processed by the circuit (7) so as to derive the direction of rotation and/or speed of rotation and/or position of the pulse generating means with respect to the detection device.

**2.** A bearing element according to Claim 1, **characterised in that** the aligned sensitive elements (5) are chosen from amongst the group comprising Hall effect sensors, magnetoresistors and giant magnetoresistors.

**3.** A bearing element according to Claim 1 or 2, **characterised in that** the sensitive elements are placed at equal distances from each other.

**4.** A bearing element according to any one of Claims 1 to 3, **characterised in that** the pulse generating means is an annular piece made of synthetic material containing ferrite particles formed by a plurality of contiguous areas with a direction of magnetisation which is reversed in a given area with respect to the two areas which are contiguous with it.

5. A bearing element according to anyone of the previous claims, **characterised in that** the pole length (Lp) of the annular means generating magnetic pulses, defined as the length of a magnetic pole measured at the reading radius in question, is substantially equal to the product of the number (2N) of sensitive elements (5) and the distance (d) between sensitive elements, the signals SIN and COS then being in substantially perfect quadrature and having substantially the same amplitude.

6. A bearing element according to anyone of the previous claims, **characterised in that** the pole length (Lp) of the annular means generating magnetic pulses is less than the product of the number (2N) of sensitive elements (5) and the distance (d) between sensitive elements.

7. A bearing element according to anyone of the previous claims, **characterised in that** the pole length (Lp) of the annular means generating magnetic pulses is greater than the product of the number (2N) of sensitive elements (5) and the distance (d) between sensitive elements.

8. A bearing element according to Claim 7, **characterised in that** the detection device comprises programming means arranged so that an even number (2M) of sensitive elements, less than the total number (2N) of these elements (5), can be employed to form two subsets of M elements, each sensitive element (5) in the first subset being connected to a first adder (10), each sensitive element in the second subset being connected to a second adder (11), the two sums issuing from the first and second adders (10, 11) being connected to the input of a third adder (12) and, via an inverter (13), the output of the second adder (11) being connected to the input of a fourth adder (14), the signals issuing from the third (12) and fourth (14) adders being processed by a circuit so as to derive the direction of rotation and/or speed of rotation of the pulse generating means with respect to the detection device, the said signals being in substantially perfect quadrature.

9. A bearing element according to Claim 8, **characterised in that** the programming means is of EEPROM type.

10. A bearing element according to Claim 8, **characterised in that** the programming means is of Zener Zapping type.

11. A bearing element according to Claim 6 or 7, **characterised in that** an amplifying circuit is able to reestablish identical amplitudes for the signals issuing from the third and fourth adders.

12. A bearing element provided with an annular means generating magnetic pulses and a device (4) for detecting these pulses, the detection device comprising a plurality of sensitive elements (5) delivering analogue signals, and an electronic circuit (7) for processing said analogue signals in order to obtain signals which are in quadrature, wherein the detection device (4) comprises a number of sensitive elements (5) which is a multiple of 4 divided into four subsets of P elements, wherein

- each sensitive element (5) in the first subset with P elements is connected to a first adder supplying a signal $S_1$;
- each sensitive element (5) in the second subset with P elements is connected to a second adder supplying a signal $S_2$;
- each sensitive element (5) in the third subset with P elements is connected to a third adder supplying a signal $S_1'$;
- each sensitive element (5) in the fourth subset with P elements is connected to a fourth adder supplying a signal $S_2'$;

the detecting device further comprising a circuit of adders and inverters suitable for supplying two signals SIN and COS equalling respectively :

$$SIN = (S_1 - S_2) - (S_1' - S_2') ;$$

$$COS = (S_1 + S_2) - (S_1' + S_2') ;$$

these signals SIN and COS being free of magnetic offset.

**13.** A bearing element according to Claim 12, **characterised in that** the aligned sensitive elements (5) are chosen from amongst the group comprising Hall effect sensors, magnetoresistors and giant magnetoresistors.

**14.** A bearing element according to Claim 12 or 13, **characterised in that** the sensitive elements are placed at equal distances from each other.

**15.** A bearing element according to any one of Claims 12 to 14, **characterised in that** the pulse generating means is an annular piece made of synthetic material containing ferrite particles formed by a plurality of contiguous areas with a direction of magnetisation which is reversed in a given area with respect to the two areas which are contiguous with it.

**16.** A bearing element according to any one of claims 12 to 15, **characterised in that** the detection device comprises an interpolator increasing the resolution of these output signals.

**17.** A bearing element according to any one of the previous Claims, **characterised in that** the sensitive elements are integrated on a circuit support of the ASIC type.

**18.** A bearing element according to Claim 17, **characterised in that** the detection device is included in a personalised integrated circuit of the ASIC type.

**19.** A bearing element according to any one of Claims 1 to 18, **characterised in that** the pulse generating means is integrated into a pre-assembled assembly forming a sealing joint.

**20.** A bearing element according to Claim 19, **characterised in that** it comprises a fixed race to which the detecting device is fixed.

**Patentansprüche**

**1.** Lager mit einem ringförmigem, magnetische Impulse erzeugenden Mittel und einer Erfassungsvorrichtung (4) dieser Impulse, wobei die Erfassungsvorrichtung eine Mehrzahl von analogische Signale liefernden empfindlichen Elementen (5) umfasst, sowie eine elektronische Schaltung (7) zur Verarbeitung der besagten analogischen Signale, um Signale in Quadratur zu erhalten, **dadurch gekennzeichnet, dass** die Erfassungsvorrichtung ein gerade Zahl 2N von fluchtenden empfindlichen Elementen aufweist, wobei die Einheit der 2N empfindlichen Elemente in zwei Untereinheiten (8, 9) von N Elementen unterteilt ist, wobei jedes empfindliche Element (5) der ersten Untereinheit (8) an einen ersten Addierer (10) und jedes empfindliche Element (5) der zweiten Untereinheit (9) an einen zweiten Addierer (11) angeschlossen ist, wobei die beiden von dem ersten und zweiten Addierer (10, 11) kommenden Summen ($S_1$, $S_2$) an den Eingang eines dritten Addierers (12) angeschlossen sind, wobei der Ausgang ($S_1$) des ersten Addierers (10) und, über einen Umschalter (13), der Ausgang ($S_2$) des zweiten Addierers (11) an den Eingang eines vierten Addierers (14) angeschlossen sind, wobei die vom dritten (12) und vierten (14) Addierer kommenden Signale SIN = $S_1$+$S_2$ und COS = $S_1$-$S_2$ von der Schaltung (7) verarbeitet werden, um die Drehrichtung und/oder die Drehzahl und/oder die Position des Impulse erzeugenden Mittels in Bezug auf die Erfassungsvorrichtung abzuleiten.

**2.** Lager nach Anspruch 1, **dadurch gekennzeichnet, dass** die fluchtenden empfindlichen Elemente (5) aus der Gruppe gewählt werden, die Hallsonden, Magnetoresistenzen, Riesen-Magnetoresistenzen umfasst.

**3.** Lager nach Anspruch 1 oder 2, **dadurch gekennzeichnet, dass** die empfindlichen Elemente (5) in gleichem Abstand zueinander angeordnet sind.

**4.** Lager nach einem der Ansprüche 1 bis 3, **dadurch gekennzeichnet, dass** das Impulse erzeugende Mittel ein ringförmiges Teil aus mit Ferritpartikeln verstärktem Synthetikmaterial ist, das von einer Mehrzahl von angrenzenden Bereichen mit umgekehrter Magnetisierung eines gegebenen Bereichs in Bezug auf die beiden an diesen angrenzenden Bereiche gebildet wird.

**5.** Lager nach einem der Ansprüche 1 bis 4, **dadurch gekennzeichnet, dass** die Pollänge (Lp) des ringförmigen, magnetische Impulse erzeugenden Mittels, die von der Länge eines Magnetpols gemessen am betrachteten Leserradius definiert wird, etwa dem Produkt der Anzahl (2N) der empfindlichen Elemente (5) durch den Abstand (d) zwischen empfindlichen Elementen (5) entspricht, wobei sich die Signale SIN und COS dann in etwa perfekter Quadratur befinden und etwa die gleiche Amplitude aufweisen.

6. Lager nach einem der vorgehenden Ansprüche, **dadurch gekennzeichnet, dass** die Pollänge (Lp) des ringförmigen, magnetische Impulse erzeugenden Mittels kleiner ist als das Produkt der Anzahl (2N) von empfindlichen Elementen (5) durch den Abstand (d) zwischen den empfindlichen Elementen.

7. Lager nach einem der vorgehenden Ansprüche, **dadurch gekennzeichnet, dass** die Pollänge (Lp) des ringförmigen, magnetische Impulse erzeugenden Mittels größer als das Produkt der Anzahl (2N) von empfindlichen Elementen (5) durch den Abstand (d) zwischen den empfindlichen Elementen.

8. Lager nach Anspruch 7, **dadurch gekennzeichnet, dass** die Erfassungsvorrichtung Programmiermittel umfasst, die dazu vorgesehen sind, dass eine gerade Anzahl (2M) von empfindlichen Elementen, die kleiner ist als die Gesamtanzahl (2N) dieser Elemente (5) verwendet werden kann, um zwei Untereinheiten von (M) Elementen zu bilden, wobei jedes empfindliche Element (5) der ersten Untereinheit an einen ersten Addierer (10) und jedes empfindliche Element der zweiten Untereinheit an einen zweiten Addierer (11) angeschlossen ist, wobei die beiden von dem ersten und zweiten Addierer (10, 11) kommenden Summen an den Eingang eines dritten Addierers (12) angeschlossen sind und, über einen Umschalter (13), der Ausgang des zweiten Addierers (11) an den Eingang eines vierten Addierers (14) angeschlossen ist, wobei die vom dritten (12) und vierten (14) Addierer kommenden Signale von einer Schaltung verarbeitet werden, um die Drehrichtung und/oder die Drehzahl und/oder die Position des Impulse erzeugenden Mittels in Bezug auf die Erfassungsvorrichtung abzuleiten, wobei sich die besagten Signale etwa perfekt in Quadratur befinden.

9. Lager nach Anspruch 8, **dadurch gekennzeichnet, dass** die Programmiermittel des Typs EEPROM sind.

10. Lager nach Anspruch 8, **dadurch gekennzeichnet, dass** die Programmiermittel des Typs Zener Zapping sind.

11. Lager nach Anspruch 6 oder 7, **dadurch gekennzeichnet, dass** eine Verstärkerschaltung für die vom dritten und vierten Addierer kommenden Signale eine identische Amplitude wiederherstellen kann.

12. Lager mit einem ringförmigem, magnetische Impulse erzeugenden Mittel und einer Erfassungsvorrichtung (4) dieser Impulse, wobei die Erfassungsvorrichtung eine Mehrzahl von analogische Signale liefernden empfindlichen Elementen (5) umfasst, sowie eine elektronische Schaltung (7) zur Verarbeitung der besagten analogischen Signale, um Signale in Quadratur zu erhalten, wobei die Erfassungsvorrichtung (4) eine Anzahl von empfindlichen Elementen (5) umfasst, die ein Vielfaches von vier beträgt und in vier Untereinheiten von P Elementen unterteilt ist wobei

- jedes empfindliche Element (5) der ersten Untereinheit von P Elementen an einen ersten Addierer angeschlossen ist, der ein Signal $S_1$ liefert;
- jedes empfindliche Element (5) der zweiten Untereinheit von P Elementen an einen zweiten Addierer angeschlossen ist, der ein Signal $S_2$ liefert;
- jedes empfindliche Element (5) der dritten Untereinheit von P Elementen an einen dritten Addierer angeschlossen ist, der ein Signal $S'_1$ liefert;
- jedes empfindliche Element der vierten Untereinheit von P Elementen an einen vierten Addierer angeschlossen ist, der ein Signal $S'_2$ liefert,

und dass die Erfassungseinheit ferner eine Addierer- und Umschalterschaltung umfasst, die zwei Signale SIN und COS mit folgender Wertigkeit liefern kann:

$$SIN = (S_1 - S_2) - (S'_1 - S'_2);$$

$$COS = (S_1 + S_2) - (S'_1 + S'_2);$$

wobei diese Signale SIN und COS kein magnetisches Offset aufweisen.

**13.** Lager nach Anspruch 12, **dadurch gekennzeichnet, dass** die fluchtenden empfindlichen Elemente (5) aus der Gruppe gewählt werden, die Hallsonden, Magnetoresistenzen, Riesen-Magnetoresistenzen umfasst.

**14.** Lager nach Anspruch 12 oder 13, **dadurch gekennzeichnet, dass** die empfindlichen Elemente (5) in gleichem Abstand zueinander angeordnet sind.

**15.** Lager nach einem der Ansprüche 12 bis 14, **dadurch gekennzeichnet, dass** das Impulse erzeugende Mittel ein ringförmiges Teil aus mit Ferritpartikeln verstärktem Synthetikmaterial ist, das von einer Mehrzahl von angrenzenden Bereichen mit umgekehrter Magnetisierung eines gegebenen Bereichs in Bezug auf die beiden an diesen angrenzenden Bereiche gebildet wird.

**16.** Lager nach einem der Ansprüche 12 bis 15, **dadurch gekennzeichnet, dass** die Erfassungsvorrichtung einen Interpolator umfasst, der die Auflösung dieser Ausgangssignale erhöht.

**17.** Lager nach einem der vorgehenden Ansprüche, **dadurch gekennzeichnet, dass** die empfindlichen Elemente in einen Schaltungsträger des Typs ASIC integriert sind.

**18.** Lager nach Anspruch 17, **dadurch gekennzeichnet, dass** die Erfassungsvorrichtung in einer personalisierten integrierten Schaltung des Typs ASIC enthalten ist.

**19.** Lager nach einem der Ansprüche 1 bis 18, **dadurch gekennzeichnet, dass** das Impulse erzeugende Mittel in einer vormontierten, eine Dichtung bildenden Einheit integriert ist.

**20.** Lager nach Anspruch 19, **dadurch gekennzeichnet, dass** es einen festen Ring umfasst, mit dem die Erfassungsvorrichtung verbunden ist.

FIG.1

FIG.2

$$SIN = (S1 - S2) - (S1' - S2')$$
$$COS = (S1 + S2) - (S1' + S2')$$

FIG.3

16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2667947
- FR 2669432
- FR 2669728
- FR 2671633
- FR 2678691
- FR 2678692
- FR 2690989
- FR 2693272
- FR 2694082
- FR 2702567
- FR 2710985
- FR 2718499
- EP 375019 A
- EP 420040 A
- EP 420041 A
- EP 438624 A
- EP 487405 A
- EP 488853 A
- EP 498298 A
- EP 518157 A
- EP 521789 A
- EP 522933 A
- EP 531924 A
- EP 557931 A
- EP 557932 A
- EP 647851 A
- EP 693689 A
- EP 701132 A
- EP 701133 A
- EP 714029 A
- EP 745857 A
- EP 759311 A
- EP 753679 A
- EP 767385 A
- FR 2639689
- FR 2640706
- FR 2645924
- FR 2730283
- FR 2732458
- FR 2717266
- FR 2701298
- EP 371836 A
- EP 376771 A
- EP 484195 A
- EP 394083 A
- EP 607719 A
- EP 616219 A
- EP 619438 A
- EP 631140 A
- EP 652438 A
- EP 671628 A
- EP 725281 A
- EP 735348 A
- FR 2599794 A
- EP 395783 A
- WO 9701660 A
- FR 9712033
- FR 2754063